Europäisches Patentamt

European Patent Office

Office européen des brevets

(11) Veröffentlichungsnummer: **0 222 930**
**A1**

(12) **EUROPÄISCHE PATENTANMELDUNG**

(21) Anmeldenummer: 85114845.2

(22) Anmeldetag: 22.11.85

(51) Int. Cl.⁴: **A01B 13/08** , A01B 63/111

(43) Veröffentlichungstag der Anmeldung:
27.05.87 Patentblatt 87/22

(84) Benannte Vertragsstaaten:
DE FR GB NL

(71) Anmelder: **Kirchberger, Franz**
**Lichtenfelser Strasse 43**
**D-8623 Staffelstein(DE)**

(72) Erfinder: **Kirchberger, Franz**
**Lichtenfelser Strasse 43**
**D-8623 Staffelstein(DE)**

(74) Vertreter: **LOUIS, PÖHLAU, LOHRENTZ &**
**SEGETH**
**Kesslerplatz 1 P.B. 3055**
**D-8500 Nürnberg(DE)**

(54) **Tiefenlockerer.**

(57) Um die Zerstörung eines Tiefenlockerers für den Boden und nachfolgender Maschinen beim Auftreffen auf ein unnachgiebiges Hindernis zu vermeiden, wird vorgeschlagen, Einzelschare (32) nur über ein Seil miteinander zu verbinden, um eine nachgiebige Anordnung zu schaffen, die den ersten Stoß aufnehmen kann, um den Tiefenlockerer (18) mit Hilfe einer Kolben-Zylindereinheit (58) um eine durch die unteren Punkte eines Dreipunktgestänges eines Traktors gehende Schwenkachse (12) nach oben zu - schwenken.

FIG.1

EP 0 222 930 A1

## Tiefenlockerer

Die Erfindung betrifft ein landwirtschaftliches Bodenbearbeitungsgerät mit einem Tiefenlockerer für den Boden, der an sich von einem gemeinsamen Rahmen nach unten erstreckenden Stielen befestigte und während der Bodenbearbeitung unterhalb der Erdoberfläche laufende Schare zum Anheben des darüber liegenden Erdreiches aufweist, die in Fortbewegungsrichtung ab einer vorbestimmten Widerstandskraft gegeneinander beweglich sind.

Ein derartiges Bodenbearbeitungsgerät ist bekannt. Bei dem bekannten Bodenbearbeitungsgerät ist an jedem Stiel ein einziges Schar unabhängig von den benachbarten Scharen befestigt. Trifft nun ein einzelnes Schar oder treffen mehrere Schare während der Bodenbearbeitung auf ein unnachgiebiges Hindernis, so ist vorgesehen, daß der betroffene Stiel oder die betroffenen Stiele am Rahmen abscheren, um größeren Schaden zu vermeiden. Kleinere vorübergehende Hindernisse können überwunden werden, indem eine Abfederung der Stiele am Rahmen vorgesehen wird, die noch vor einer Abscherung wirksam ist.

Bei allen anderen Tiefenlockerern oder Erdhobeln, wie sie auch genannt werden, ist aber überhaupt keine Sicherung ähnlich der beim eingangs genannten Tiefenlockerer vorgesehen. Wenn diese Tiefenlockerer über ein unnachgiebiges Hindernis, wie z.B. einen Fels, fahren, ist eine vollständige Zerstörung des Tiefenlockerers die Folge.

Oft laufen hinter den Tiefenlockerern noch andere Bearbeitungsgeräte, die im Falle einer vollständigen oder teilweisen Zerstörung des Tiefenlockerers durch ein unnachgiebiges Hindernis in Mitleidenschaft gezogen und ebenfalls vollständig oder teilweise zerstört werden.

Wenn auch beim eingangs genannten Tiefenlockerer das Problem der Zerstörung des Bodenbearbeitungsgerätes durch unnachgiebige Hindernisse ein wenig gemildert ist, so ist es doch bei weitem nicht ausgeräumt. Darüberhinaus hat der eingangs beschriebene Tiefenlockerer den großen Nachteil, daß sich an den vielen Stielen (nämlich einer pro Schar) beim Bearbeiten des Feldes Pflanzenrückstände, Steine oder festes Erdreich stauen können.

Der Erfindung liegt nun die Aufgabe zugrunde, ein Gerät der eingangs genannten Art zu schaffen, bei dem eine Zerstörung des Gerätes durch unnachgiebige Hindernisse vermieden wird.

Diese Aufgabe wird erfindungsgemäß dadurch gelöst, daß der Rahmen, an dem die Stiele befestigt sind, um eine quer zur Fortbewegungsrichtung verlaufende und in Fortbewegungsrichtung vor oder höchstens auf gleicher Höhe wie die Schare liegende Achse schwenkbar gelagert ist.

Diese Konstruktion hat zur Folge, daß beim Auftreffen auf ein unnachgiebiges Hindernis der Tiefenlockerer um die Rahmenschwenkachse nach oben schwenken kann, um auf diese Weise dem Hindernis auszuweichen und eine Zerstörung des Tiefenlockerers zu vermeiden. Dabei wird die Schwenkbewegung des Tiefenlockerers nach oben insbesondere dadurch erleichtert, daß aufgrund der Lage der Schwenkachse in Bezug zur Schar ein vorübergehendes tiefer gehendes Eindringen der Schar in das Erdreich vermieden wird, bevor das Anheben der Schar einsetzt.

Der Tiefenlockerer, d.h. der Rahmen, die Stiele und die Schare, könnte nur unter dem Einfluß der Schwerkraft stehen, so daß die Masse des Tiefenlockerers für die Kollisionsenergie und damit den Umfang der Beschädigungen ausschlaggebend ist. In einer bevorzugten Ausführungsform kann jedoch das Anheben des Tiefenlockerers unterstützt werden, um Beschädigungen möglichst gering zu halten. Dazu sind in der bevorzugten Ausführungsform eine Kolben-Zylindereinheit zum Verschwenken des Rahmens um die Rahmenschwenkachse, ein die auf einen Stiel einwirkende Kraft erfassender Kraftaufnehmer -vorzugsweise ein am Stiel befestigter Dehnungsmeßstreifen -und eine Steuereinrichtung vorgesehen, die die Kolben-Zylindereinheit im Sinne eines Verschwenkens des Rahmens vom Boden weg betätigt, sobald der Kraftaufnehmer ein Überschreiten eines Grenzwertes überfaßt. Wird nun durch den Kraftaufnehmer an einem der Stiele ein Kraftwert erfaßt, der größer ist, als er normalerweise bei der Tiefenlockerung des Bodens auftritt, so wird automatisch der gesamte Tiefenlockerer ausgeschwenkt.

Anders als bei einer mechanischen Sollbruchstelle kann über eine Auswerte-Elektronik auf die Flankensteilheit von Belastungsspitzen abgestellt werden, so daß die Gerätefestigkeit gegenüber Dauerbelastungen durch schweren und harten Boden nicht geschwächt wird.

Die oben erwähnte Kolben-Zylindereinheit hat außerdem noch den Vorteil, daß sie gewünschtenfalls auch zur Tiefeneinstellung des Tiefenlockerers verwendet werden kann.

Ferner ist es von Vorteil, wenn die Stiele - schwenkbar am Rahmen befestigt sind und eine Kolben-Zylindereinheit zur Einstellung des Winkels zwischen Stiele und Rahmen vorgesehen ist, wobei die Steuereinrichtung ab Überschreiten des Grenzwertes die Kolben-Zylindereinheit derart betätigt, daß der Winkel zwischen den Stielen und dem Rahmen im Sinne eines Anhebens der Schare verändert wird. Diese Ausgestaltung in Verbindung mit der vorhergehenden hat zur Folge, daß die gesamte Hebebewegung der Schare auf zwei gleichzeitig ablaufende Bewegungen aufgeteilt wird, (wodurch die Hebebewegung insgesamt - schneller wird.) Das ist natürlich sehr wichtig, um Beschädigungen am Tiefenlockerer beim Auftreffen auf ein Hindernis möglichst gering zu halten. Außerdem kann bei dieser Ausgestaltung die Kolben-Zylindereinheit zwischen Rahmen und Stiel zur Tiefeneinstellung des Tiefenlockerers verwendet werden.

Beide Kolben-Zylindereinheiten, die eine zum Rahmenschwenken sowie die andere zum Verschwenken der Stiele gegenüber dem Rahmen können hydraulisch so koordiniert werden, daß ihre Bewegung nur synchron gleichsinnig oder gegenläufig stattfinden kann, je nachdem, wie sie aufgehängt sind und wirken. Zwei Kammern bzw. doppelt-wirkende Kolben-Zylindereinheiten können über hydraulische Leitungen so verbunden sein, daß die Ausweichschwenkbewegung des Gerätes gegen den Traktor die Hebung des Tiefenlockerers erzwingt. Die hydraulische Synchron-Koppelung der beiden Kolben-Zylindereinheiten muß dabei unterbrochen und die Kolben-Zylindereinheit zum Verschwenken des Rahmens freigegeben werden, wenn die Kolben-Zylindereinheit für die Stiele am oberen Anschlag ankommt.

Zweckmäßigerweise ist im betriebsbereiten Zustand der Winkel zwischen Rahmen (der Horizontallinie) und den Stielen kleiner als 90°.

Um das Staumassenproblem an den Stielen zu vermeiden, das bei dem bekannten Gerät der eingangs genannten Gattung auftritt, wird ferner vorgeschlagen, eine Vielzahl von Scharen zwischen benachbarten Stielen anzuordnen. Dabei könnten zwischen den Stielen starre Verbindungsstreben vorgesehen sein, an denen die einzelnen Schare bspw. über Schwalbenschwanzführungen geführt und festgeklemmt sind.

Nach einer weiteren Ausbildung der Erfindung sind aber die Schare untereinander nur über ein aufwickelbares Element, wie bspw. Seil oder Kette, verbunden. Für dieses Merkmal, wird in Verbindung mit dem Merkmal, daß eine Vielzahl von Scharen zwischen benachbarten Stielen angeordnet ist, selbständiger Schutz beansprucht. Es vereinfacht nämlich den mechanischen Aufbau des Tiefenlockerers ungemein. Insbesondere muß nicht jedes Schar an einem eigenen Stiel befestigt sein, um die Nachgiebigkeit eines Schars zu gewährleisten. Vielmehr wird die Nachgiebigkeit der Schare in Fortbewegungsrichtung durch ein Nachgeben eines über eine Spannvorrichtung gespannten Seiles bewerkstelligt, was wesentlich weniger aufwendig ist. Diese Ausführungsform hat dann auch noch den Vorteil, daß die auf ein einzelnes Schar auftreffende Kraft seitlich auf die anderen Schare verteilt wird, und ferner den Vorteil, daß alle Schare zwischen zwei Stielen gemeinsam und damit sehr schnell nach einer Kollision in ihre ursprüngliche ordnungsgemäße Lage zurückgebracht werden können, indem das Seil gespannt wird.

Geht man bspw. davon aus, daß im Betrieb der Zug mit dem Tiefenlockerer 2 m/sec. zurücklegt, dann benötigt er im allgemeinen ca. 6 m Anhalteweg. Taucht nun ein unnachgiebiges Hindernis auf, so kann innerhalb von 2/100 sec. über die Dehnungsmeßstreifen an den Stielen ein Ansprechen der Kolben-Zylindereinheiten im Sinne eines sofortigen Anhebens der Schare bewirkt werden. Innerhalb dieser 2/100 sec. legt der Zug jedoch 4 cm zurück. Dieser Weg wird mit Hilfe des durch alle Schare laufenden Seils aufgefangen, so daß im Ergebnis praktisch keine Beschädigung des Tiefenlockerers und eventuell nachlaufender Bodenbearbeitungsgeräte auftreten kann.

Zweckmäßigerweise sind zum Spannen des aufwickelbaren Elementes eine Kolben-Zylindereinheit und ein Kniehebelmechanismus vorgesehen.

Da der erfindungsgemäße Tiefenlockerer durch unnachgiebige Hindernisse nicht zerstört wird und somit auch nicht andere in einer Kombination mit dem Tiefenlockerer verwendete Bodenbearbeitungsgeräte in Mitleidenschaft ziehen kann, kann in äußerst zweckmäßiger Weise an Rahmen in Fortbewegungsrichtung vor den Scharen ein weiteres Bodenbearbeitungsgerät, wie z.B. eine Kreiselegge, vorgesehen werden, das ggf. mit dem Tiefenlockerer angehoben wird, und kann ferner zweckmäßigerweise am Rahmen in Fortbewegungsrichtung hinter den Scharen ein weiteres Bodenbearbeitungsgerät, insbesondere eine Bodenverdichtungswalze, vorgesehen werden, die dann ebenfalls zusammen mit dem Tiefenlockerer ggf. angehoben wird. Bei der erfindungsgemäßen Konstruktion ist es auch möglich, durch entsprechenden Anstellwinkel der Schare den durch die Schwerkraft der Verdichtungswalze bedingten Bodendruck noch zu vergrößern.

Weitere Vorteile, Einzelheiten und Merkmale der Erfindung ergeben sich aus der nachstehenden anhand der beiliegenden Zeichnung erfolgenden Beschreibung einer bevorzugten Ausführungsform. In der Zeichnung stellen dar:

Fig. 1 eine Seitenansicht eines landwirtschaftlichen Bodenbearbeitungsgerätes mit Kreiselegge. Tiefenlockerer und Packerwalze gemäß der Erfindung,

Fig. 2 eine Draufsicht auf den Tiefenlockerer alleine und auf einen Teil der Packerwalze und

Fig. 3 einen Schnitt durch eine Schar des Tiefenlockerers entlang der Linie III-III.

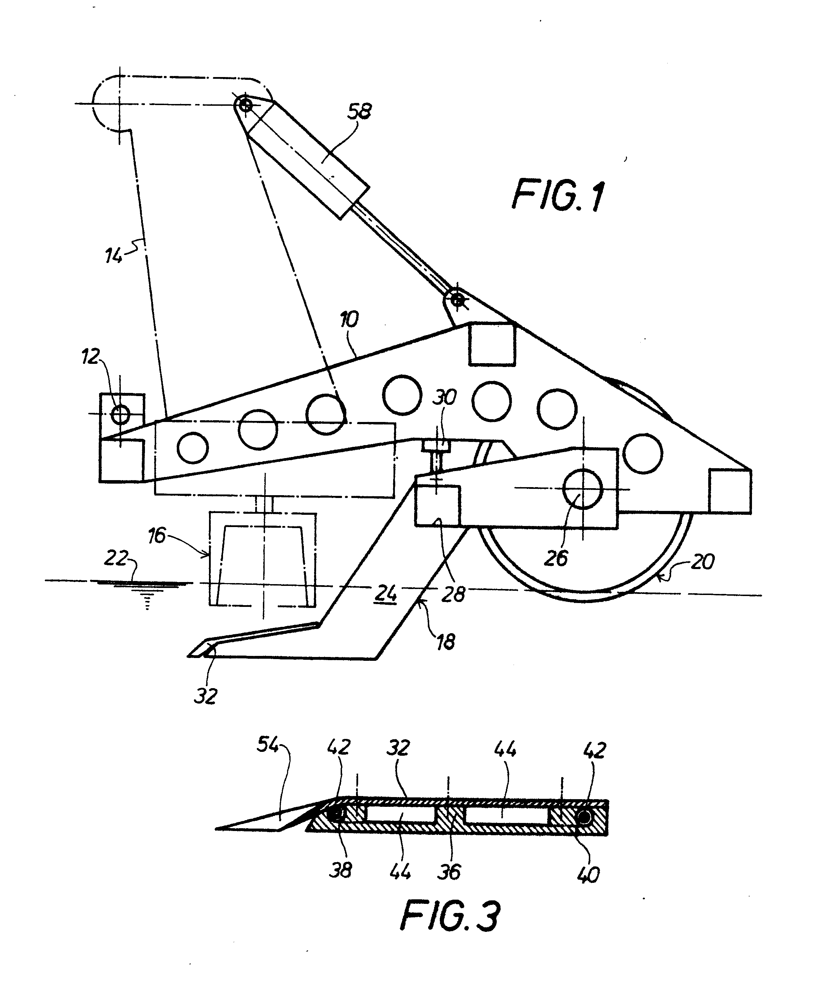

Mit dem Bezugszeichen 10 ist ein starrer Rahmen bezeichnet, der über zwei Ösen 12 an den unteren Punkten eines (nicht gezeigten) Dreipunktgestänges schwenkbar befestigt ist. Eine starr mit und mittig an dem Rahmen 10 befestigte Stütze 14 ist, wie es am besten aus Fig. 1 ersichtlich ist, mit dem oberen Punkt des Dreipunktgestänges einer Zugmaschine verbunden. Am Rahmen 10 sind, wie es aus Fig. 1 hervorgeht, eine Kreiselegge 16, ein Tiefenlockerer 18 und eine Packerwalze 20 befestigt. Die Erdbodenoberfläche ist gestrichelt eingezeichnet und hat das Bezugszeichen 22.

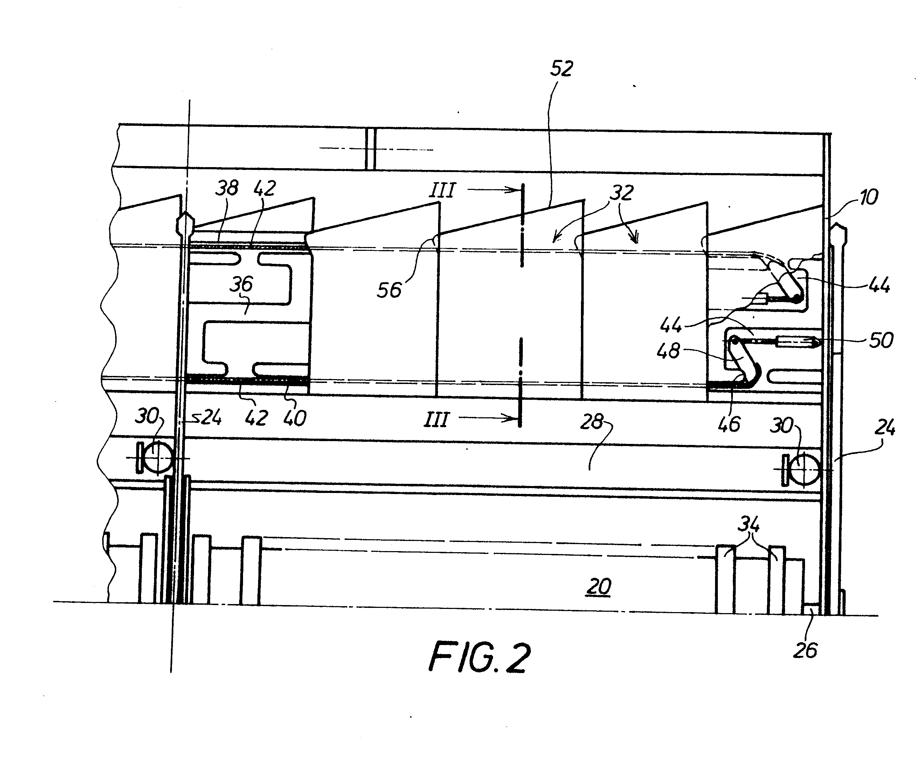

Der Tiefenlockerer 18 weist drei Stiele 24 auf - (in Fig. 2 sind zur zwei Stiele zu sehen), die um die am Rahmen 10 gelagerte Packerwalzenachse 26 verschwenkbar angeordnet sind und, wie es am besten aus Fig. 1 ersichtlich ist, die Form eines langgestreckten Z aufweisen. Die Stiele 24 sind an der von der Packerwalzenachse 26 aus gesehenen ersten Abknickung oberhalb des Erdbodens 22 über eine Querstrebe 28 miteinander verbunden, an der im Bereich der Stiele 24 jeweils eine Kolben-Zylindereinheit 30 mit einem Ende befestigt ist, während das andere Ende der Kolben-Zylindereinheit 30 am Rahmen 10 befestigt ist, so daß die Stiele 24 um die Packerwalzenachse 26 mit Hilfe der Kolben-Zylindereinheiten 30 geschwenkt werden können.

Zwischen den Stielen 24 sind nach der zweiten Abknickung an ihrem unteren Ende Schare 32 angeordnet, wie dies am besten aus Fig. 2 hervorgeht. Die Schare 32 erstrecken sich unter die Kreiselegge 16 und laufen unterhalb der Erdbodenoberfläche 22 (sh. Fig. 1), um eine Tiefenlockerung des Bodens zu bewirken, wobei nachfolgend die von der Kreiselegge 16 aufgelockerte Erdbodenober fläche durch die Packerwalze 20 mit Hilfe von im Säabstand angeordneten Verdichtungsreifen 34 entlang den Säreihen verdichtet wird.

In dem dargestellten Ausführungsbeispiel befinden sich fünf Tiefenlockerungsschare 32 zwischen zwei Stielen 24 (sh. Fig. 2). Jedes Schar 32 ist, wie das am besten aus Fig. 3 hervorgeht, entlang der senkrechten strichpunktierten Linien auf einem Scharkörper 36 aufgeschraubt oder anderweitig befestigt, wobei jedem Schar 32 ein gleichgroßer Scharkörper 36 zugeordnet ist. In diesem Scharkörper 36 sind, wie das aus den Fig. 2 und 3 ersichtlich ist, vorne und hinten über die gesamte Arbeitsbreite Bohrungen bzw. Ausnehmungen 38,40 vorgesehen. In diesen Ausnehmungen laufen nach der Erfindung Seile 42 durch alle Scharkörper 36 hindurch und auch durch den mittleren Stiel 24, wie aus den Fig. 2 und 3 ersichtlich ist, wobei die Seile 42 mit einem Ende an dem in Fig. 2 nicht mehr gezeigten links außen angeordneten Stiel befestigt sind und mit dem anderen Ende in demjenigen Schar, das an dem rechts außen liegenden Stiel 24 starr befestigt ist. Diese Befestigung erfolgt über Spanneinrichtungen, die in Hohlräumen 44 angeordnet sind. welche vom Scharkörper 36 und dem darauf befestigten Schar 32 gebildet werden. Diese Spanneinrichtungen bestehen aus einem sich am Scharkörper bei 46 (sh. Fig. 29 abstützenden Kniehebel 48, an dem das Seil wie gezeigt befestigt ist und an dessen anderem Ende zum Verschwenken des Kniehebels 48 eine kleine Kolbenzylindereinheit 50 einwirkt. Auf diese Weise sind alle sonst an sich unabhängig voneinander beweglichen Schare 32 miteinander verbunden wie die Wäschestücke durch eine Wäscheleine. Diese nicht starre Verbindung unter den Scharen hat den Vorteil, daß die Schare jedes für sich in Fahrtrichtung nachgeben können, sobald sie auf ein unnachgiebiges Hindernis auftreffen. Selbstverständlich spannt sich hierbei das Seil 42, wobei die Kolben-Zylindereinheit 50 als Stoßdämpfer wirkt und die Gegenkraft bestimmt. In der Praxis wird die Nachgiebigkeit eines Schars in Fahrtrichtung mit ca. 4 cm ausgelegt, wobei erst ab Überschreiten einer bestimmten Kraft die Kolben-Zylindereinheit 50 und damit die Seile 42 nachgeben.

Aus den Fig. 2 und 3 geht auch hervor, daß die Vorderkante 52 der aneinandergereihten Schare 32 keine durchgehende Linie sondern wegen einer nach einer Seite rückwärts und abwärts verlaufenden Vorderschneide 54 eine asymmetrische Zick-Zack-Linie bilden, wobei die zurückversetzte tiefer reichende Schar-Außenkantenecke 56 unter dem Nachbarschar und unter der Basisfläche des Scharverbandes ausläuft. Dort abrutschende Staumassen, vor allem Halme, werden so abgeführt, ohne weiter am Tiefenlockerer haften zu können. Auch wird der Widerstand, den die Erde dem Tiefenlockerer entgegensetzt, geringer, wodurch die Zugkraft zum Ziehen des Tiefenlockerers ebenfalls reduziert wird.

In Fig. 1 ist noch eine weitere Kolben-Zylindereinheit 58 gezeigt, die mit einem Ende am Rahmen 10 und mit dem anderen Ende an der Stütze 14 für die Kreiselegge 16 befestigt ist, so daß der Rahmen 10 einschließlich dem Tiefenlockerer 18 und der Packerwalze 20 um die durch die Ösen 12 gehende Achse nach oben geschwenkt wird, wenn sich die Kolben-Zylindereinheit 50 zusammenzieht. Bei dieser Schwenkbewegung werden die Schare nur angehoben, weil in Fahrtrichtung die durch die Ösen 12 hindurchgehende Schwenkachse des Rahmens 10 vor den Scharen 32 liegt.

Trifft nun der Tiefenlockerer 18 mit seinen Scharen 32 auf ein unnachgiebiges Hindernis, so können die Schare 32 um eine gewisse Strecke, bspw. 4cm, nachgeben. Dieses Nachgeben geschieht, sobald eine gewisse Kraft überschritten wird. Nun sind an den Stielen 24 bspw. (nicht gezeigte) Dehnungsmeßstreifen angeordnet, die ebenfalls bei Überschreiten dieser vorgegebenen Kraft ein Signal abgeben, das die Kolben-Zylindereinheit 50 zum Zusammenziehen veranlaßt, so daß die gesamte Garnitur über das Hindernis angehoben wird. Die Zeit, in der die Schare 32 aufgrund ihrer Seilaufhängung nachgeben, kann nun genutzt werden, um die gesamte Garnitur mit Hilfe der Kolben-Zylindereinheit 50 anzuheben. Auf diese Weise lassen sich beim Überfahren unnachgiebiger Hindernisse Totalzerstörungen des Bodenbearbeitungsgerätes vermeiden.

Nachzutragen ist noch, daß mit Hilfe der Kolben-Zylindereinheit 30 auch die Tiefe der Schare 32 offensichtlich eingestellt werden kann. Ebenso kann die Kolbenzylindereinheit 30 gleichzeitig mit der Kolbenzylindereinheit 50 im Sinne eines Zusammenziehens betätigt werden, um die Anhebung der Schare 32 zu beschleunigen, falls die Garnitur auf ein Hindernis stößt.

## Ansprüche

1. Landwirtschaftliches Bodenbearbeitungsgerät mit einem Tiefenlockerer für den Boden, der an sich von einem gemeinsamen Rahmen (10) nach unten erstreckenden Stielen (24) befestigte und während der Bodenbearbeitung unterhalb der Erdoberfläche laufende Schare (32) zum Anheben des darüberliegenden Erdreiches aufweist, die in Fortbewegungsrichtung ab einer vorbestimmten Widerstandskraft gegeneinander beweglich sind, **dadurch gekennzeichnet,** daß der Rahmen (10), an dem die Stiele (24) befestigt sind, um eine quer zur Fortbewegungsrichtung verlaufende und in Fortbewegungsrichtung vor und höchstens auf gleicher Höhe wie die Schare (32) liegende Achse (12) schwenkbar gelagert ist.

2. Bodenbearbeitungsgerät nach Anspruch 1, **dadurch gekennzeichnet,** daß eine Kolben-Zylindereinheit (58) zum Verschwenken des Rahmens (10) um die Rahmenschwenkachse (12), ein die auf einen Stiel (24) einwirkende Kraft erfassender Kraftaufnehmer -vorzugsweise ein am Stiel befestigter Dehnungsmeßstreifen -und eine Steuereinrichtung vorgesehen sind, die die Kolben-Zylindereinheit -(58) im Sinne eines Verschwenkens des Rahmens (10) vom Boden weg betätigt, sobald der Kraftaufnehmer ein Überschreiten eines Grenzwertes erfaßt.

3. Bodenbearbeitungsgerät nach Anspruch 1 oder 2, **dadurch gekennzeichnet** , daß die Stiele (24) schwenkbar am Rahmen (10) befestigt sind und eine Kolben-Zylindereinheit (30) zur Einstellung des Winkels zwischen Stiele (24) und Rahmen (10) vorgesehen ist, wobei die Steuereinrichtung ab Überschreiten eines Grenzwertes die Kolben-Zylindereinheit (30) derart betätigt, daß der Winkel zwischen Stiel (24) und Rahmen (10) im Sinne eines Anhebens der Schare verändert wird.

4. Bodenbearbeitungsgerät nach Anspruch 3, **dadurch gekennzeichnet,** daß der Winkel zwischen Rahmen (10) und Stiele (24) kleiner als 90° ist.

5. Landwirtschaftliches Bodenbearbeitungsgerät mit einem Tiefenlockerer für den Boden, der an sich von einem gemeinsamen Rahmen (10) nach unten erstreckenden Stielen (24) befestigte und während der Bodenbearbeitung unterhalb der Erdoberfläche laufende Schare (32) zum Anheben des darüberliegenden Erdreiches aufweist, die in Fortbewegungsrichtung ab einer vorbestimmten Widerstandskraft gegeneinander beweglich sind. - (insbesondere nach einem der Ansprüche 1 bis 4,) **dadurch gekennzeichnet,** daß eine Vielzahl von Scharen (32) zwischen benachbarten Stielen (24) angeordnet ist und die Schare (32) untereinander nur über ein aufwickelbares Element (42), wie z.B. Seil oder Kette verbunden sind.

6. Bodenbearbeitungsgerät nach Anspruch 5, **dadurch gekennzeichnet,** daß zum Spannen des aufwickelbaren Elementes (42) eine Kolben-Zylindereinheit 50 und ein Kniehebelmechanismus (48) vorgesehen sind.

7. Bodenbearbeitungsgerät nach einem der Ansprüche 1 bis 6, **dadurch gekennzeichnet,** daß am Rahmen (10) in Fortbewegungsrichtung vor den Scharen (32) ein weiteres Bodenbearbeitungsgerät, wie z.B. eine Kreiselegge (16) vorgesehen ist.

8. Bodenbearbeitungsgerät nach einem der Ansprüche 1 bis 7, **dadurch gekennzeichnet,** daß am Rahmen (10) in Fortbewegungsrichtung hinter den Scharen ein weiteres Bodenbearbeitungsgerät, insbesondere eine Bodenverdichtungswalze (20), vorgesehen ist.

9. Bodenbearbeitungsgerät nach einem der Ansprüche 5 bis 8, **dadurch gekennzeichnet,** daß die Vorderkante (52) der aneinandergereihten Schare (32) keine durchgehende Linie sondern wegen einer nach einer Seite rückwärts und abwärts verlaufenden Vorderschneide (54) eine asymmetrische Zick-Zack-Linie bilden, wobei die zurückversetzte tiefer reichende Schar-Außenkantenecke 56 unter dem Nachbarschar und unter der Basisfläche des Scharverbandes ausläuft.

FIG.1

0 222 930

58

14

10

12

30

16

22

24

28

26

20

18

32

54  42  32  44  42

38  44  36  40

FIG.3

*FIG.2*

0 222 930

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 960 220 (VEIKKO) <br> * Spalte 1, Zeilen 25-60; Spalte 2, Zeilen 24-29; Ansprüche 1-7; Abbildungen 1-4 * | 1 | A 01 B 13/08 <br> A 01 B 63/111 |
| X | US-A-3 539 018 (SPRENKEL) <br> * Insgesamt * | 1 | |
| Y | | 2,3 | |
| Y | DERWENT PUBLICATIONS, SOVIET INVENTIONS ILLUSTRATED, week 84/19, 20. Juni 1984; & SU - A - 396 597 (NON BLACK EARTH AGR) 15-02-1982 | 2,3 | |
| A | US-A-3 207 232 (BECHMAN) <br> * Spalte 1, Zeile 10 - Spalte 2, Zeile 7; Ansprüche; Abbildungen 1,2,5 * | 2,3,5 | RECHERCHIERTE SACHGEBIETE (Int. Cl.4) <br><br> A 01 B <br> E 02 F |
| A | US-A-3 584 692 (FASSE) <br> * Zusammenfassung; Abbildungen 1,2,3 * | 1,2,3 | |
| A | EP-A-0 153 102 (DEERE) <br> * Zusammenfassung * | 2 | |
|  | --- -/- | | |

Der vorliegende Recherchenbericht wurde für alle Patentansprüche erstellt.

| Recherchenort <br> DEN HAAG | Abschlußdatum der Recherche <br> 30-07-1986 | Prüfer <br> VON ARX V.U. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A- 949 098 (KORTLANG) <br> * Insgesamt * | 5,9 | |
| | --- | | |
| A | DE-C- 910 355 (NIEBULL) <br> * Insgesamt * | 5,9 | |
| | --- | | |
| A | DE-C-1 075 882 (VOSS) <br> * Ansprüche ; Abbildungen 1,2 * | 5,9 | |
| | --- | | |
| A | DE-A-3 232 086 (WEICHEL) <br> * Ansprüche 1-4; Abbildungen 1,2 * | 7,8 | |
| | --- | | |
| A | BE-A- 446 941 (BASTELEYSENS) | | |
| | --- | | RECHERCHIERTE SACHGEBIETE (Int. Cl.4) |
| A | DE-C-1 097 738 (VOSS) | | |
| | --- | | |
| A | US-A-2 228 865 (BIRD) | | |
| | --- | | |
| A | FR-A-1 578 619 (CATERPILLAR) | | |
| | ----- | | |

Der vorliegende Recherchenbericht wurde für alle Patentansprüche erstellt.

| Recherchenort <br> DEN HAAG | Abschlußdatum der Recherche <br> 30-07-1986 | Prüfer <br> VON ARX V.U. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82